# EUROPÄISCHE PATENTSCHRIFT

(11) **EP 0 566 560 B1**
(45) Veröffentlichungstag und Bekanntmachung des Hinweises auf die Patenterteilung: **10.01.1996**
(21) Anmeldenummer: 93890078.4
(22) Anmeldetag: 08.04.1993
(51) Int. Cl.: C22C 38/00, B23D 65/00

(54) **Werkstoff für den spanabhebenden Bereich von Bi-Metall-Sägeblattern**
Material for the cutting edge of bi-metal saw blades
Matériau pour une arête de coupe de scies bimétalliques

(30) Priorität: 08.04.1992 AT 743/92
(43) Veröffentlichungstag der Anmeldung: 20.10.1993
(73) Patentinhaber: BÖHLER YBBSTALWERKE Ges.m.b.H., A-3333 Böhlerwerk (AT)
(72) Erfinder: Döberl, Dieter, Dipl.-Ing., A-3333 Böhlerwerk (AT); Leban, Karl, Dipl.-Ing., A-2700 Wr. Neustadt (AT); Pacher, Oskar, Dr., A-8041 Graz (AT); Daxelmüller, Manfred, Dipl.-Ing., A-3340 Waidhofen (AT)
(74) Vertreter: Brauneiss, Leo, Dipl.Ing.

(56) Entgegenhaltungen:
- EP-A- 0 078 254
- EP-A- 0 319 511
- GB-A- 1 465 018
- US-A- 4 058 650

## Beschreibung

Die Erfindung betrifft einen geschweißten Bi-Metall-Bandrohling mit einem Schneidteil und einem Trägerteil.

Sägeblätter oder Sägebänder werden aus einem Bandrohling gefertigt, welcher durch ein stirnseitiges Zusammenschweißen eines vorzugsweise kaltgewaltzen und bearbeiteten Trägerbandes mit einem Schneidteil bzw. mit einem Schneidband hergestellt ist. Ein Anschweißen des im wesentlichen bandförmigen oder profildrahtförmigen Schneidteiles an das Trägerband erfolgt dabei insbesondere mittels ESS (Elektronenstrahlschweißen). Nach einem Glühen wird der geschweißte Bi-Metall-Rohling gewalzt, worauf der Schneidteil unter Bildung eines Zahnprofiles vielfach materialabtragend bearbeitet wird. Dabei kann eine Erstellung der Zähne bzw. eine Herstellung des Sägerohlings derart erfolgen, daß entweder nur die Zahnspitzenteile im spanabhebenden Bereich des Sägeblattes aus dem als Schneidteil aufgeschweißten Werkstoff gebildet werden, oder daß das gesamte Zahnprofil im Schneidteil eingeformt ist. Durch ein Härten und Anlassen des Sägerohlings erfolgt eine Einstellung der geforderten Materialeigenschaften und zwar große Zähigkeit und insbesondere hohe Biegewechselfestigkeit des Trägerbandes sowie hohe Standzeit im praktischen Einsatz bzw. große Härte und Abriebfestigkeit der Zähne im Schneidteil.

Zur Erhöhung der Standzeit von Sägeblättern und Sägebändern wurden legierungstechnische Maßnahmen mit dem Einsatz von gegebenenfalls Aluminium und insbesondere Vanadin enthaltende Legierungen für das Trägerband und Schnellstähle als Werkstoff für den Schneidteil durchaus erfolgreich angewendet.

Im praktischen Betrieb wird der spanabhebende Bereich bzw. werden die Zähne im Bereich der Schweißverbindung eines Bi-Metall-Sägeblattes wechselnd auf Biegung sowie Zug bzw. Druck und die Zahnspitzen auf Abrieb bei durch den Schnitt bzw. die Spanabtragung erhöhten Temperaturen beansprucht. Das Gefüge des Trägerbandes und jenes des Zahngrundes bzw. der Schweißnaht sowie des schweißnahtnahen Bereiches des Schneidteiles muß daher durch eine Wärmebehandlung auf höchste Biegewechselfestigkeit des Materials eingestellt sein, wobei die Zahnspitzen gleichzeitig höchste Härte und Zahigkeit des Werkstoffes bei entsprechender Karbidverteilung aufweisen sollen.

Besteht der Schneidteil aus Schnellstahl und sind hohe Härtetemperaturen sowie ein Vakuumhärteverfahren anzuwenden, so kann dadurch im Trägerband eine Grobkornstruktur mit verringerter Biegewechselfestigkeit des Werkstoffes entstehen. Zur Lösung dieses Problemes wird gemäß EP-A-0078254 vorgeschlagen, dem Trägerwerkstoff Mikrolegierungselemente und zwar Titan und/oder Niob und/oder Aluminium zuzusetzen.

Zur Verbesserung der Langzeit-Gebrauchseigenschaften von Bi-Metall-Sägebändern, insbesondere zur Erhöhung der Biegewechselfestigkeit, der Zähigkeit und der Härte des Trägerbandes wurde auch, wie aus der EP-A-0319511 bekannt geworden ist, vorgeschlagen, dieses aus einem martensitaushärtbaren Stahl mit einem Legierungsgehalt von mindestens 10 % zu bilden.

Auf Grund der unterschiedlichen Legierungszusammensetzung ist auch ein unterschiedliches Gefügeumwandlungsverhalten der Träger- und Schneidwerkstoffe gegeben. Eine Wärmebehandlung muß daher immer mit Parametern erfolgen, welche möglichst in beiden Teilen das geforderte Eigenschaftsprofil annähernd erbringen. Für den die Zahnspitzenteile bildenden Werkstoff können dabei jedoch oft nicht die mit der Legierung erreichbaren Schneidhaltigkeitswerte bei der Spanabtragung erzielt werden, weil insbesondere eine auf die Härtung folgende Anlaßbehandlung auch auf das Trägermaterial auszurichten ist. Bei nicht voll entsprechenden Wärmebehandlungsbedingungen entstehen nachteilige Eigenschaftsveränderungen im Werkstoff, die höheren Verschleiß bewirken. Der Verschleiß der Zahnspitzen ist jedoch nicht nur durch Belastungen bei der Spanabtragung begründet, vielmehr treten auch Phänomene eines von Drehwerkzeugen her bekannten Klebens der Späne an den Zahnflanken und einer Auskolkung auf. Diese, auch durch erhöhte Temperatur, die bei der Abspanung auftritt, begründete Erscheinungen führen frühzeitig zu einem Verlust der Schneideigenschaften und zur Unbrauchbarkeit der Säge.

Hier will die Erfindung Abhilfe schaffen und setzt sich zum Ziel, einen Bi-Metall-Bandrohling mit einem Schneidteil und einem Trägerteil anzugeben, welcher Rohling eine gute Verbindungsschweißung besitzt, wobei bei auf das Trägerband abgestimmten Wärmebehandlungsparametern der Schneidteil hohe Härte und Verschleißfestigkeit aufweist sowie geringe Neigung zum Kleben der Späne bei hohem Widerstand gegen Auskolkung besitzt.

Weiters ist es die Aufgabe der Erfindung, die Verwendung eines Bi-Metall-Bandrohlings für Sägebänder bzw. Sägeblätter mit verbesserten Gebrauchseigenschaften anzugeben. Diese Ziele werden bei einem geschweißten Bi-Metall-Bandrohling mit einem Schneidteil und einem Trägerteil erreicht, dadurch daß der Schneidteil aus einer Eisenbasis-Legierung mit
C: 0,7 - 2.3 %
Cr: 3,2 - 4,8 %
Al: 0,2 - 2,0 %
V: 0,7 - 6,5 %
Mo: bis 10,5 %
W: bis 18,5%
Co: bis 14,5 %
Fe: Rest plus herstellungsbedingte Begleitelemente
besteht , wobei die Summe der Legierungsmetalle mindestens 10 % betragen muß.

Die mit der Erfindung erzielten Vorteile sind im wesentlichen darin zu sehen, daß auf Grund der Zusammensetzung des Schneidteiles bzw. des durch das Legierungselement Aluminium günstigerweise bewirkten geänderten Umwandlungsverhaltens des Schneidteilwerkstoffes eine bessere Anpassung bzw. eine Angleichung der Wämebehandlungsparameter an diejenigen, die für das Trägermaterial erforderlich sind, bewirkt wird. In Verbindung mit Aluminium sind für diese Anpassung und für ein erforderliches Härte- und Ausscheidungsverhalten weiters die Elemente Vanadin und Kohlenstoff maßgebend. Vollkommen überraschend hat sich jedoch auch gezeigt, daß am erfindungsgemäßen Werkstoff für den Schneidteil ein Kleben der Späne bei im wesentlichen allen Schnittgewindigkeiten weitgehend unterbleibt und eine Auskolkung der Flanken nicht erfolgt. Die Gründe dafür sind wissenschaftlich noch nicht vollkommen geklärt.

Von Fachleuten auf dem Gebiet der Oberflächentechnologie werden diese die Standzeit von Sägen wesentlich verlängernden Wirkungen auf eine Bildung einer Oberflächenschicht bzw. einer Beschichtung zurückgeführt. Danach soll durch eine bei einer Spanabnahme- energetisch begründet- entstehende Temperaturerhöhung eine Oxidation der Oberfläche der Zähne erfolgen, wobei das eine hohe Affinität zu Sauerstoff aufweisende Legierungselement Aluminium mit Sauerstoff unter Bildung von Al₂O₃ reagiert. Eine günstige Wirkung einer aus der Gasphase abgeschiedenen Oxidbeschichtung auf Werkzeuge ist bekannt, vollkommen überraschend war jedoch, daß offensichtlich durch einen Aluminiumgehalt im Werkstoff in den erfindungsgemäßen Grenzen eine vorteilhafterweise sich erneuernde Beschichtung selbsttätig aufbauen kann.

Wenn, wie in günstiger Weise vorgesehen, der Schneidteil aus einer Eisenbasis-Legierung mit
C: 1,0 - 1,6 %
Cr: 3,5 - 4,5 %
Al: 0,5 - 1,8%
V: 1,0 - 2,9 %
Mo:0,8 -10,5 %
W: 0,8 - 2,5 %
Co: bis 14,5 %
Fe: Rest plus herstellungsbedingte Begleitelemente
besteht, werden besonders gute Gebrauchseigenschaften vorzugsweise von Sägeblättern und insbesondere Sägebändern erreicht. Im Hinblick auf die Zerspanung von harten metallischen Materialien sowie die Bearbeitung von Cr- und Ni-Cr-Legierungen ist es bevorzugt, wenn die Eisenbasis-Legierung eine Zusammensetzung von
C: 1,2 - 1,4 %
Cr: 3,9 - 4,2 %
Al: 0,8 - 1,5%
V: 1,1 - 1,9 %
Mo: 9,0 - 9,8 %
W: 1,0 - 1,8%
Co: bis 14,5 %
Fe: Rest plus herstellungsbedingte Begleitelemente
aufweist und wobei die Summe der Legierungsmetalle mindestens 20 % betragen muß.

Es wurde gefunden, daß bei Verwendung eines geschweißten Bi-Metall-Bandrohlings mit einem Schneidteil und einem Trägerteil, wobei das Schneidteil aus einer Eisenbasis-Legierung mit
C: 0,7 - 2,3 %
Cr: 3,2 - 4,8 %
Al: 0,2- 2,0 %
V: 0,7- 6,5 %
Mo:bis 10,5 %
W: bis 18,5 %
Co: bis 14,5 %
Fe: Rest plus herstellungsbedingte Begleitelemente
besteht und wobei die Summe der Legierungsmetalle mindestens 10 % betragen muß, für Sägeblätter, insbesondere Bandsägeblätter, deren Standzeit wesentlich verlängert wird und dadurch besondere Wirtschaftlichkeit gegeben ist.

Es wurden vergleichend die Schnittleistungen von Bandsägen bei der Trennung von weichgeglühten Warmarbeitsstahl DIN-Werkstoff Nr. 1.2344 festgestellt, wobei die Sägen folgende Schneidteilzusammensetzungen bzw. Konzentrationen der wichtigtsten Elemente in Gew.-% aufwiesen:

| | C | Cr | Mo | V | W | Co | Al |
|---|---|---|---|---|---|---|---|
| A | 1,1 | 4,01 | 9,81 | 1,13 | 1,36 | 7,8 | 0,021 |
| B | 1,28 | 3,99 | 9,83 | 1,28 | 1,34 | 7,6 | 0,99 |
| C | 0,87 | 4,12 | 4,98 | 1,89 | 6,4 | -- | 0,023 |
| D | 1,1 | 4,08 | 5,10 | 2,01 | 6,39 | -- | 0,02 |

Bei im wesentlichen gleicher Wärmebehandlung wiesen die erfindungsgemäßen Sägebänder mit einem Schneidteil aus den Legierungen B bzw. D gegenüber denjenigen mit einem Schneidteil aus den mit A und C bezeichneten Legierungen eine Standzeiterhöhung von 83 bzw. 69 % auf. Eine weitere wesentlich größere Standzeiterhöhung wurde mit den Legierungen B und D erreicht, wenn die Anlaßtemperaturen um 30 bis 40 ° C erhöht wurden.

Untersuchungen ergaben, daß Al-legierte Schneidwerkstoffe höhere Schnittgeschwindigkeiten zulassen, wobei die Schneidhaltigkeit der Zahnspitzen länger erhalten bleibt und eine Tendenz zum Kleben der Späne an den Zahnflanken wesentlich verringert ist, was letztlich zu einer Senkung der Arbeitstemperatur der Schneidteile führt. Bei Erpobungen des Verbindungs- bzw. Schneidbereiches zwischen Trägerband und Schneidteil wurde festgestellt, daß bei einer Biegewechselbelastung im elastischen Bereich der Werkstoffe die Werte für die Haltbarkeit bzw. bis zur Bruchbildung beginnend bei 0,2 Gew.-% Al ansteigen, im Bereich von 0,5 Gew.-% Al stark erhöht werden und bei zwischen 0,8 und 1,5 Gew.-% Al das höchste Niveau erreichen. Mit weiter steigenden Al-Konzentrationen wird ein Abfall der Biegewechselfestigkeitswerte bewirkt, wobei ab ca. 2,0 bis 3,0 durch Graphitausscheidungen ein Steilabfall der Werte möglich ist.

Extrem hohe Schnittleistungen bei hohen Standzeiten eines umlaufenden Sägebandes wurden erreicht, wenn auf Trägerwerkstoffen mit Gehalten in Gew.-% von 0,85 bis 1,25 Cr, 0,05 bis 0,28 V, 0,02 bis 0,12 Al, Rest Eisen , Begleitelemente und Verunreinigungen Schneidteile durch Elektronen- oder Plasmastrahlschweißung aus Wolfram- und/oder Molybdän-Schnellstählen aufgebracht waren, wobei das Schnellstahl- Schneidteilmaterial in Gew.-% 0,95 bis 1,4 C, 3,8 bis 4,3 Cr, 1,0 bis 1,95 V, 0,65 bis 1,55 Al aufwies und das gehärtete Sägeband bei erhöhter Temperatur angelassen wurde.

## Patentansprüche

1. Geschweißter Bi-Metall-Bandrohling mit einem Schneidteil und einem Trägerteil, wobei das Schneidteil aus einer Eisenbasis- Legierung mit
C: 0,7 - 2,3%
Cr: 3,2 - 4,8 %
Al: 0,2 - 2,0 %
V: 0,7 - 6,5%
Mo: bis 10,5 %
W: bis 18,5 %
Co: bis 14,5 %
Fe: Rest plus herstellungsbedingte Begleitelmente
besteht und wobei die Summe der Legierungsmetalle mindestens 10 % betragen muß.

2. Geschweißter Bi-Metall-Bandrohling nach Anspruch 1, wobei das Schneidteil aus einer Eisenbasis-Legierung mit
C: 1,0 - 1,6 %
Cr: 3,5 - 4,5 %
Al: 0,5 - 1,8%
V: 1,0 - 2,9%
Mo: 0,8 - 10,5 %
W: 0,8 - 2,5 %
Co: bis 14,5 %
Fe: Rest plus herstellungsbedingte Begleitelemente
besteht und wobei die Summe der Legierungsmetalle mindestens 10% betragen muß.

3. Geschweißter Bi-Metall-Bandrohling nach Anspruch 2, wobei das Schneidteil aus einer Eisenbasis-Legierung mit
C: 1,2 -1,4%
Cr: 3,9 - 4,2 %
Al: 0,8 - 1,5 %
V: 1,1 - 1,9 %
Mo: 9,0 - 9,8 %
W: 1,0 - 1,8 %
Co: bis 14,5 %
Fe: Rest plus herstellungsbedingte Begleitelemente
besteht und wobei die Summe der Legierungsmetalle mindestens 20 % betragen muß.

4. Verwendung eines geschweißten Bi-Metall-Rohlings mit einem Schneidteil und einem Trägerteil, wobei der Schneidteil aus einer Eisenbasislegierung gemäß einem der Ansprüche 1 bis 3 besteht, für Sägeblätter, insbesondere Bandsägeblätter.

## Claims

1. A welded bi-metal band blank with a cutting part and a carrier part, wherein the cutting part consists of an iron-based alloy with
C: 0·7 to 2·3%
Cr. 3·2 to 4·8%
Al: 0·2 to 2·0%
V: 0·7 to 6·5%
Mo: up to 10·5%
W: up to 18·5%
Co: up to 14·5%
Fe: remainder plus accompanying elements caused by manufacture,
and wherein the sum of the alloy metals should amount to at least 10%.

2. A welded bi-metal band blank according to Claim 1, wherein the cutting part consists of an iron-based alloy with
C: 1·0 to 1·6%
Cr: 3·5 to 4·5%
Al: 0.5 to 1·8%
V: 1·0 to 2·9%
Mo: 0·8 to 10·5%
W: 0·8 to 2·5%
Co: up to 14·5%
Fe: remainder plus accompanying elements caused by manufacture,
and wherein the sum of the alloy metals should amount to at least 10%.

3. A welded bi-metal band blank according to Claim 2, wherein the cutting part consists of an iron-based alloy with
C: 1·2 to 1·4%
Cr: 3·9 to 4·2%
Al: 0·8 to 1·5%
V: 1·1 to 1·9%
Mo: 9·0 to 9·8%
W: 1·0 to 1·8%
Co: up to 14·5%
Fe: remainder plus accompanying elements caused by manufacture,
and wherein the sum of the alloy metals should amount to at least 20%.

4. Use of a welded bi-metal band blank with a cutting part and a carrier part, wherein the cutting part consists of an iron-based alloy according to one of Claims 1 to 3, for saw blades, and in particular bandsaw blades.

## Revendications

1. Ebauche de ruban bimétallique soudée comportant un élément de coupe et un élément de support, l'élément de coupe étant composé d'un alliage à base de fer comprenant :
C : 0,7 à 2,3 %
Cr : 3,2 à 4,8 %
Al : 0,2 à 2,0 %
V : 0,7 - 6,5 %
Mo : jusqu'à 10,5 %
W : jusqu'à 18,5 %
Co : jusqu'à 14,5 %
Fe : le reste plus des éléments d'accompagnement spécifiques à la production,
la proportion totale de métaux alliés devant être supérieure ou égale à 10 %.

2. Ebauche de ruban bimétallique soudée selon la revendication 1, caractérisée en ce que l'élément de coupe est composé d'un alliage à base de fer comprenant :
C : 1,0 à 1,6 %
Cr : 3,5 à 4,5 %
Al : 0,5 à 1,8 %
V : 1,0 à 2,9 %
Mo : 0,8 à 10,5 %
W : 0,8 à 2,5 %
Co : jusqu'à 14,5 %
Fe : le reste plus des éléments d'accompagnement spécifiques à la production,
la proportion totale de métaux alliés devant être supérieure ou égale à 10 %.

3. Ebauche de ruban bimétallique soudée selon la revendication 2, caractérisée en ce que l'élément de coupe est composé d'un alliage à base de fer comprenant :
C : 1,2 à 1,4 %
Cr : 3,9 à 4,2 %
Al : 0,8 à 1,5 %
V : 1,1 à 1,9 %
Mo : 9,0 à 9,8 %
W : 1,0 à 1,8 %
Co : jusqu'à 14,5 %
Fe : le reste plus des éléments d'accompagnement spécifiques à la production,
la proportion totale de métaux alliés devant être supérieure ou égale à 20 %.

4. Utilisation, pour des lames de scie, en particulier des lames de scie à ruban, d'une ébauche bimétallique soudée comportant un élément de coupe et un élément de support, l'élément de coupe étant composé d'un alliage à base de fer selon l'une des revendications 1 à 3.
